# EUROPEAN PATENT SPECIFICATION

(11) **EP 2 349 760 B1**
(45) Date of publication and mention of the grant of the patent: **29.05.2013**
(21) Application number: 08875311.6
(22) Date of filing: 12.11.2008
(51) Int. Cl.: B60J 7/043

(54) **MOVABLE PANEL AND OPEN ROOF CONSTRUCTION PROVIDED THEREWITH**
BEWEGLICHE PLATTE UND DAMIT VERSEHENE OFFENE DACHKONSTRUKTION
PANNEAU MOBILE ET CONSTRUCTION À TOIT OUVRANT ÉQUIPÉE DE CELUI-CI

(43) Date of publication of application: 03.08.2011
(73) Proprietor: Inalfa Roof Systems Group B.V., 5804 AB Venray (NL)
(72) Inventor: MERKX, Martijn Antoon Christine, NL-5807 AD Oostrum (NL)
(74) Representative: De Vries & Metman
(86) International application number: PCT/EP2008/065366
(87) International publication number: WO 2010/054687

(56) References cited:
- DE-A1- 3 425 104
- DE-U1- 9 016 831

## Description

The invention firstly relates to a movable panel for use in an open roof construction for a vehicle, comprising a panel main body and at least two reinforcement members positioned in the vicinity of a forward and rearward edge, respectively, of the panel main body and firmly connected thereto.

When the reinforcement members and panel main body are manufactured from different materials, for example, the panel main body is manufactured from a material of which transparency is an important feature, whereas the rein-forcement members is manufactured from a material of which, obviously, stiffness is an important feature, the use of such different materials may lead to difficulties during the manufacture of the movable panel. When, for example, the manufacturing process involves stages with increased temperature, such different materials may present different thermal expansions causing the completed panel to deviate from its desired shape. For counteracting or preventing such deviations complicated measures may be needed, both procedural as in terms of tooling which increase the complexity and cost of the manufacture of such panels.

Document DE 9016031 U discloses a movable panel according to the preamble of claim 1 as well as an open roof construction according to the preamble of claim 6.

It is an object of the present invention to provide an improved movable panel of the type referred to above, as a result of which during the manufacture of the panel disturbing effects may be minimised as much as possible.

Thus, in accordance with the present invention a movable panel of the type referred to above has a panel main body and reinforcement members made of glass materials with closely matching thermal expansion coefficients is characterised in that the reinforcement members each comprise a substantially monolithic glass body.

The importance of this measure is evident because movable panels made of glass material are applied in increasing numbers in the automotive industry.

For example the reinforcement members may be made of tempered glass material but other types of glass may be applied too.

The reinforcement members may have a varying cross section along the length.

The invention specifically provides excellent results in case the reinforcement members are connected to the panel main body by means of an encapsulating material, such as for example polyurethane, pvc or alike. Generally the process of applying the encapsulating material involves high temperatures for liquefying said material, but as a result of the features according to the present invention detrimental effects of said high temperatures are avoided as much as possible.

However, notwithstanding the above it is conceivable too that the reinforcement members are connected to the panel main body by means of gluing, or even still other ways of connecting or a combination of, for example, glueing and encapsulation (e.g. using an acrylic adhesive followed by encapsulation).

The invention further relates to an open roof construction for a vehicle, comprising a roof opening provided in a fixed roof part and a movable panel for opening and closing said roof opening, which panel comprises a panel main body and at least two reinforcement members positioned in the vicinity of a forward and rearward edge, respectively, of the panel main body and firmly connected thereto, as defined in claim 6.

In accordance with the present invention the panel main body and the reinforcement members are made of materials with closely matching thermal expansion coefficients.

In different embodiments of the open roof construction according to the present invention the panel main body and the reinforcement members are made of glass material, the reinforcement members may be connected to the panel main body by means of an encapsulating material, and the encapsulating material may comprise polyurethane, pvc or alike.

Hereinafter the invention will be elucidated while referring to the drawing in which:
Figure 1 schematically shows part of a vehicle with an open roof construction;
Figure 2 schematically shows a panel for use in the open roof construction, from below, and
Figure 3 schematically shows a cross section according to III-III in figure 2.

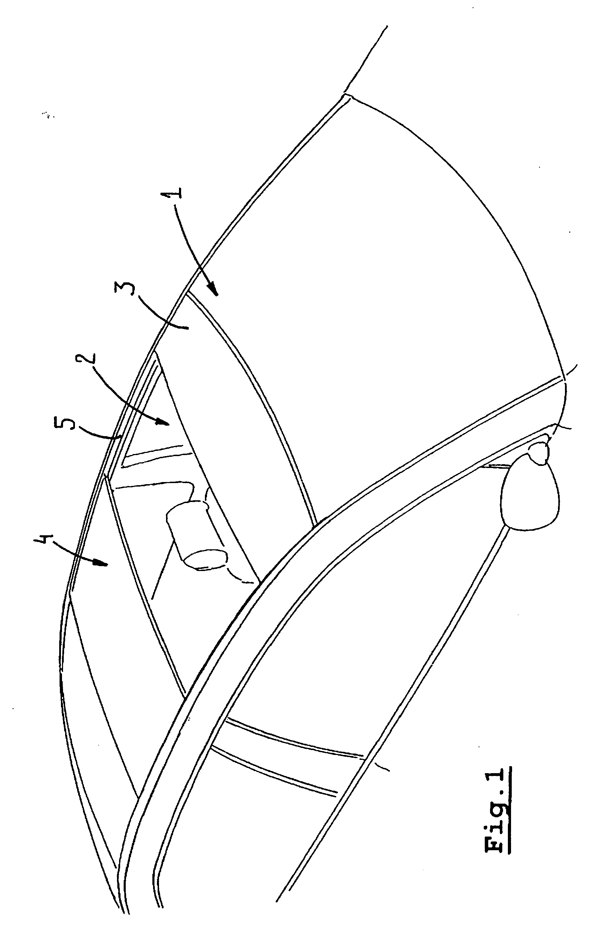

Referring to figure 1, a vehicle 1 is illustrated comprising an open roof construction with a roof opening 2 provided in a fixed roof part 3. A glass panel 4 is movable along longitudinal guides 5 at opposite sides of the roof opening 3 for selectively opening and closing the roof opening.

The glass panel 4 may be moved manually or by driving means not illustrated here but known per se. The cooperation between the glass panel 4 and the guides 5 may occur in any known manner, and is not illustrated here in detail.

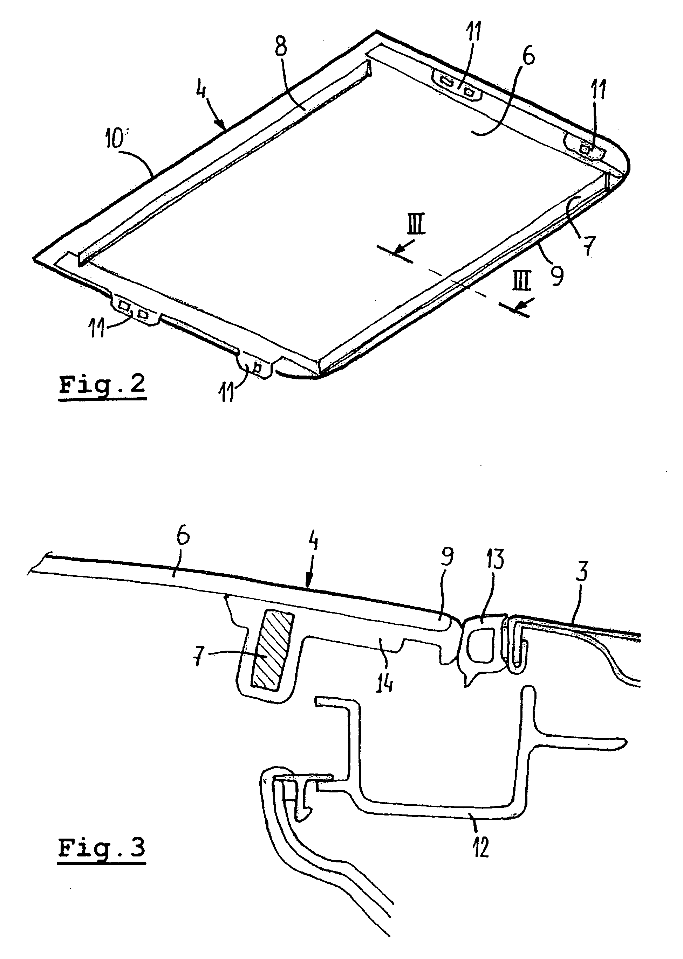

As illustrated schematically in figure 2 (which shows the movable glass panel 4 perspectively from below), the glass panel comprises a panel main body 6 and at least two reinforcement members 7,8 positioned in the vicinity of a forward edge 9 and rearward edge 10, respectively, of the panel main body. These reinforcement members 7,8 are firmly connected to the panel main body 6, for example by means of encapsulating as will be elucidated in figure 3.

The glass panel further comprises brackets 11 which (in a manner known per se on the field of open roof constructions) are used for driving and/or guiding the panel 4 with respect to the fixed roof part 3 (guides 5) of the vehicle 1.

In figure 3 a cross section according to III-III in figure 2 is illustrated. It is noted that in contrast to what has been illustrated in figure 2, figure 3 also shows part of the fixed roof part 3 of the vehicle with a gutter part 12 for collecting inflowing water and a seal 13 engaging the panel 4 when in a closed position.

In the shown embodiment the reinforcement member 7 (and 8) is made of glass material with a thermal expansion coefficient closely matching the thermal expansion coefficient of the panel main body 6.

As illustrated in figure 3, the reinforcement member 7 (and 8) comprises a substantially monolithic glass body.

From figure 3 it follows that in the illustrated embodiment the reinforcement member 7 is connected to the panel main body 6 by means of an encapsulating material 14, for example polyurethane, pvc or alike. This encapsulating material may be applied through a known encapsulating technique using appropriate tools. However, also other connecting methods are conceivable, such as by means of glueing.

## Claims

1. Movable panel (4) for use in an open roof construction for a vehicle, comprising a panel main body (6) and at least two reinforcement members (7, 8) positioned in the vicinity of a forward (9) and rearward (10) edge, respectively, of the panel main body and firmly connected thereto, wherein the panel main body and the reinforcement members are made of glass materials with closely matching thermal expansion coefficients, **characterized in that** the reinforcement members (7,8) each comprise a substantially monolithic glass body.

2. Movable panel according to claim 1, wherein the reinforcement members (7, 8) are made of tempered glass material.

3. Movable panel according to any of the previous claims, wherein the reinforcement members (7,8) are connected to the panel main body (6) by means of an encapsulating material (14).

4. Movable panel according to claim 3, wherein the encapsulating material (14) comprises polyurethane, pvc or alike.

5. Movable panel according to any of the claims 1-4, wherein the reinforcement (7, 8) members are connected to the panel main body (6) by means of glueing.

6. Open roof construction for a vehicle, comprising a roof opening (2) provided in a fixed roof part (3) and a movable panel (4) for opening and closing said roof opening, which panel comprises a panel main body (6) and at least two reinforcement members (7, 8) positioned in the vicinity of a forward (9) and rearward (10) edge, respectively, of the panel main body and firmly connected thereto, wherein the panel main body and the reinforcement members are made of glass materials with closely matching thermal expansion coefficients, **characterized in that** the reinforcement members (7, 8) each comprise a substantially monolithic glass body.

7. Open roof construction according to claim 6, wherein the reinforcement members (7, 8) are connected to the panel main body (6) by means of an encapsulating material (14).

8. Open roof construction according to claim 7,
wherein the encapsulating material (14) comprises polyurethane, pvc or alike.

## Patentansprüche

1. Bewegbares Paneel (4) zur Verwendung in einer Offendachkonstruktion für ein Fahrzeug, aufweisend einen Paneelhauptkörper (6) und wenigstens zwei Verstärkungselemente (7, 8), die in der Nähe eines vorderen bzw. hinteren Randes (9, 10) des Paneelhauptkörpers positioniert und mit diesen fest verbunden sind, wobei der Paneelhauptkörper und die Verstärkungselemente aus Glasmaterialien mit genau aufeinander abgestimmten Wärmeausdehnungskoeffizienten hergestellt sind, **dadurch gekennzeichnet, dass** die Verstärkungselemente (7, 8) jeweils einen im Wesentlichen monolithischen Glaskörper aufweisen.

2. Bewegbares Paneel nach Anspruch 1, wobei die Verstärkungselemente (7, 8) aus Hartglasmaterial hergestellt sind.

3. Bewegbares Paneel nach einem der vorhergehenden Ansprüche, wobei die Verstärkungselemente (7, 8) durch ein Verkapselungsmaterial (14) mit dem Paneelhauptkörper (6) verbunden sind.

4. Bewegbares Paneel nach Anspruch 3, wobei das Verkapselungsmaterial (14) Polyurethan, PVC oder dergleichen aufweist.

5. Bewegbares Paneel nach einem der Ansprüche 1-4, wobei die Verstärkungselemente (7, 8) durch Kleben mit dem Paneelhauptkörper (6) verbunden sind.

6. Offendachkonstruktion für ein Fahrzeug, aufweisend eine Dachöffnung (2), die in einem feststehenden Dachteil (3) vorgesehen ist, und ein bewegbares Paneel (4) zum Öffnen und Schließen der Dachöffnung, welches Paneel einen Paneelhauptkörper (6) und wenigstens zwei Verstärkungselemente (7, 8) aufweist, die in der Nähe eines vorderen bzw. hinteren Randes (9, 10) des Paneelhauptkörpers positioniert und mit diesen fest verbunden sind, wobei der Paneelhauptkörper und die Verstärkungselemente aus Glasmaterialien mit genau aufeinander abgestimmten Wärmeausdehnungskoeffizienten hergestellt sind, **dadurch gekennzeichnet, dass** die Verstärkungselemente (7, 8) jeweils einen im Wesentlichen monolithischen Glaskörper aufweisen.

7. Offendachkonstruktion nach Anspruch 6, wobei die Verstärkungselemente (7, 8) durch ein Verkapselungsmaterial (14) mit dem Paneelhauptkörper (6) verbunden sind.

8. Offendachkonstruktion nach Anspruch 7, wobei das Verkapselungsmaterial (14) Polyurethan, PVC oder dergleichen aufweist.

## Revendications

1. Panneau mobile (4) à utiliser dans une structure de toit ouvrant pour un véhicule, comprenant un corps principal de panneau (6) et au moins deux éléments de renforcement (7, 8) positionnés à proximité respectivement d'un bord avant (9) et d'un bord arrière (10) du corps principal de panneau et solidement raccordés à celui-ci, dans lequel le corps principal de panneau et les éléments de renforcement sont constitués de matériaux en verre ayant des coefficients de dilatation thermique parfaitement correspondants, **caractérisé en ce que** les éléments de renforcement (7, 8) comprennent chacun un corps en verre sensiblement monolithique.

2. Panneau mobile selon la revendication 1, dans lequel les éléments de renforcement (7, 8) sont constitués d'un matériau en verre trempé.

3. Panneau mobile selon l'une quelconque des revendications précédentes, dans lequel les éléments de renforcement (7, 8) sont raccordés au corps principal de panneau (6) au moyen d'un matériau d'enrobement (14).

4. Panneau mobile selon la revendication 3, dans lequel le matériau d'enrobement (14) comprend du polyuréthanne, du PVC ou analogue.

5. Panneau mobile selon l'une quelconque des revendications 1 à 4, dans lequel les éléments de renforcement (7, 8) sont raccordés au corps principal de panneau (6) par collage.

6. Structure de toit ouvrant pour un véhicule, comprenant une ouverture de toit (2) définie dans une partie de toit fixe (3) et un panneau mobile (4) pour ouvrir et fermer ladite ouverture de toit, ledit panneau comprenant un corps principal de panneau (6) et au moins deux éléments de renforcement (7, 8) positionnés à proximité respectivement d'un bord avant (9) et d'un bord arrière (10) du corps principal de panneau et solidement raccordés à celui-ci, dans lequel le corps principal de panneau et les éléments de renforcement sont constitués de matériaux en verre ayant des coefficients de dilatation thermique parfaitement correspondants, **caractérisé en ce que** les éléments de renforcement (7, 8) comprennent chacun un corps en verre sensiblement monolithique.

7. Structure de toit ouvrant selon la revendication 6, dans lequel les éléments de renforcement (7, 8) sont raccordés au corps principal de panneau (6) au moyen d'un matériau d'enrobement (14).

8. Structure de toit ouvrant selon la revendication 7, dans lequel le matériau d'enrobement (14) comprend du polyuréthanne, du PVC ou analogue.
